# EUROPÄISCHE PATENTANMELDUNG

(11) **EP 3 178 717 A1**
(43) Veröffentlichungstag der Anmeldung: **14.06.2017**
(21) Anmeldenummer: 16203159.5
(22) Anmeldetag: 09.12.2016
(51) Int. Cl.: B61B 1/00, B61D 15/00

(54) **SCHIENENFAHRZEUG BEVORZUGT ZUR ANWENDUNG IN AUTOMATISCHEN CONTAINERSORTIERANLAGEN MIT MITTIG ANGEORDNETEN ZWISCHENLAGERPLÄTZEN**

(30) Priorität: 11.12.2015 HU 1500606
(71) Anmelder: Diebel, Dietrich, 1039 Budapest (HU)
(72) Erfinder: Diebel, Dietrich, 1039 Budapest (HU)
(74) Vertreter: Harangozo, Gabor

(57) **Zusammenfassung**

Schienenfahrzeug bevorzugt zur Anwendung in automatischen Containersortieranlagen mit mittig angeordneten Zwischenlagerplätzen (3) verfügt über einen die Ladung aufnehmenden Wagenrahmen (12), der ohne Anheben der eventuellen Last aufgestützt wird und danach die Räder (15) des aufgestützten Fahrzeugs (5) von den Schienen (8) des Sortiergleises abgehoben werden und danach das Fahrzeug mit seinen eigenen Bewegungskonstruktionen (22) auf den die Stützung übernehmenden Stützrädern (19) auf den Zwischenlagerplatz (3) bewegt wird, von dem das Fahrzeug (5) in umgekehrter Reihenfolge wieder auf das Sortiergleis zurück bewegt werden kann.

Das in dem Verfahren zur Anwendung kommende Fahrzeug (5) mit dem die Last aufnehmenden Wagenrahmen (12) hat unter den Endbereichen des auf den Schienen (8) fahrenden Fahrzeugs (5) mindestens zwei Hilfsrahmen (13) mit mindestens einer Achse (14) mit Eisenbahnrädern (15) und weitere Räder, die die Seitwärtsbewegung ermöglichen, wobei der Wagenrahmen (12) federnd auf den Hilfsrahmen gelagert ist. Das Fahrzeug (5) hat in den Endbereichen der Hilfsrahmen (13) mindestens einen Stützrahmen mit Stützrädern (19), die die Seitwärtsbewegung ermöglichen und deshalb sich frei drehend in einer Ebene senkrecht zur Längsachse des Fahrzeugs (5) angeordnet sind und die Stützräder (19), sowie die Räder (15) des Fahrzeugs (5) mit senkrecht wirkenden Hebeeinrichtungen (18, 20) verbunden sind, wobei die Hebeeinrichtungen (18, 20) so miteinander verbunden sind, dass nach der Vollendung des Absenkens der einen Hebeeinrichtung (18, 20) die Bewegung der anderen Hebeeinrichtung (18, 20) in entgegengesetzter Richtung auslöst und umgekehrt. Das Fahrzeug (5) verfügt über mindestens eine pneumatisch, hydraulisch oder elektrisch betriebene Bewegungseinrichtung (22), die an dem Hilfsrahmen (13) oder dem Wagenrahmen (12) montiert ist und so das Fahrzeug (5) auf den Stützrädern (19) quer zur Längsachse des Fahrzeugs (5) bewegt werden kann, wobei die Bewegungseinrichtung (22) über mindestens ein Mittel verfügt, das so gestaltet ist, dass diese lösbar mit einem Geländegegenstand verbunden werden kann, der neben den Schienen (8) und dem Zwischenlager (3) angeordnet wurde und so die vorübergehende Verbindung zwischen dem Fahrzeug (5) und dem Geländegegenstand ermöglicht.

## Beschreibung

Die Erfindung betrifft ein Schienenfahrzeug gemäß dem Oberbegriff des Anspruchs 1. zur Anwendung in vollautomatischen Containersortieranlagen mit in der Mitte angeordneten Zwischenlagerplätzen, sowie ein Schienenfahrzeug entsprechend Anspruch 5. Die Anwendung kann vorteilhaft in vollautomatisierten Sortieranlagen für die Neuanordnung von Ladeeinheiten, besonders von Containern und Austauschbehältern angewendet werden.

DE 102010060505 A1 beschreibt einen automatisch betriebenen Lastkraftwagen mit für den Straßenverkehr geeigneten Gummireifen. Solche batteriebetriebenen Fahrzeuge sind im Hamburger Hafen im Einsatz. Die Steuerung dieser Fahrzeuge ist mit Hilfe eines zentralen Steuerungsrechners über ein drahtloses Netzwerk und in die Fahrbahn eingelassene Transponder gelöst. Diese Lösung hat den Nachteil, dass in relativ großen Mengen ausreichende Akkumulatorkapazität zur Verfügung gestellt werden muss. In der Literatur wird eine 72%ige Leistung angegeben, die die Akkumulatoren an das Fahrzeug abgeben. Diese Angabe ist sicherlich richtig, berücksichtigt aber wahrscheinlich nicht die Mehrleistung, die für den Transport der Akkumulatoren aufgebracht werden muss. Nachteilig ist weiterhin der Wartungsbedarf für derartige Fahrzeuge. Für den Austausch der Akkumulatoren ist eine gesonderte automatische Austauschstation notwendig, in der die Akkumulatoren aufgeladen und getauscht werden können. Zum Austausch der Akkumulatoren muss das Fahrzeug die Tauschstation anfahren, das Ende des Tauschvorganges abwarten und steht erst danach wieder für den Transport von Containern bereit. Akkumulatoren haben die Eigenschaft, dass sie nach einer gewissen Betriebszeit derart an Speicherkapazität verlieren, dass sie ausgesondert werden müssen. Da derartig große Akkumulatoren relativ teuer sind, entstehen Kosten, die bei einem direkten Antrieb ohne Akkumulatoren nicht entstehen. Selbstverständlich besteht auch die Möglichkeit, nur die innerhalb einer Akkueinheit ausgefallenen Akkumulatoren auszutauschen, so dass die Akkueinheit weiter verwendet werden kann. Das ist aber nur in einer Werkstatt möglich, die über die dazu notwendige Ausrüstung verfügt und in die die Akkueinheiten einzuliefern sind und in der diese mit dazu notwendigen Hebeeinrichtungen bewegt, repariert und danach wieder ausgeliefert werden können. Diese Fahrzeuge bewegen sich auf Rädern, die für den Schwerlasttransport geeignet sind. Wegen den notwendigen Lenkmanövern nutzen sich diese viel schneller ab, als Stahlräder auf Schienen. Der notwendige Austausch der Reifen erfordert Arbeitskräfte und Handarbeit. Die Kontrolle von Luftdruck und Ölständen in den Getrieben erfordern ebenfalls Arbeitskräfte und Handarbeit.

Eine von der Erfindung betroffene Sortieranlage wird z.B. in DE 202010001496 U1 beschrieben, wonach die in Fig. 1 dargestellte Anlage aus mindestens einem Eisenbahngleis 1, auf dem Züge mit Eisenbahnwaggons 2 ein- und ausfahren, aus einem Zwischenlagerplatz 3 und mindestens einem Sortiergleis 4 besteht, auf dem automatische Fahrzeuge 5 - mit der englischen Abkürzung Automatic Rail Vehicle, ARV - beweglich angeordnet sind und gegebenenfalls Ladeeinheiten 6, meist Container aufnehmen, weiterhin bestehend aus mindestens einem Portalkran 7, der die Ladeeinheiten zwischen dem Zwischenlagerplatz 3 und den Eisenbahngleisen 1 bewegt. Die automatischen Fahrzeuge können auf den Sortiergleisen 4 in Längsrichtung und auf den Zwischenlagerplätzen 3 in Querrichtung bewegt werden. Der Prozess des Umladens mit dem Portalkran 7 sowie die Bewegung der automatischen Fahrzeuge 5 auf den Sortiergleisen 4 erfolgt mit Hilfe einer auf einem fest installierten Rechner laufenden Logistiksoftware , damit die automatischen Fahrzeuge zum richtigen Zeitpunkt auf dem Zwischenlagerplatz 3 direkt unter dem Portalkran positioniert werden können. Der normale Zugverkehr kann über ein oder mehrere Umgehungsgleise erfolgen. Das Umladen von Ladeeinheiten 6 von Schiene auf Straße kann ebenfalls integriert werden.

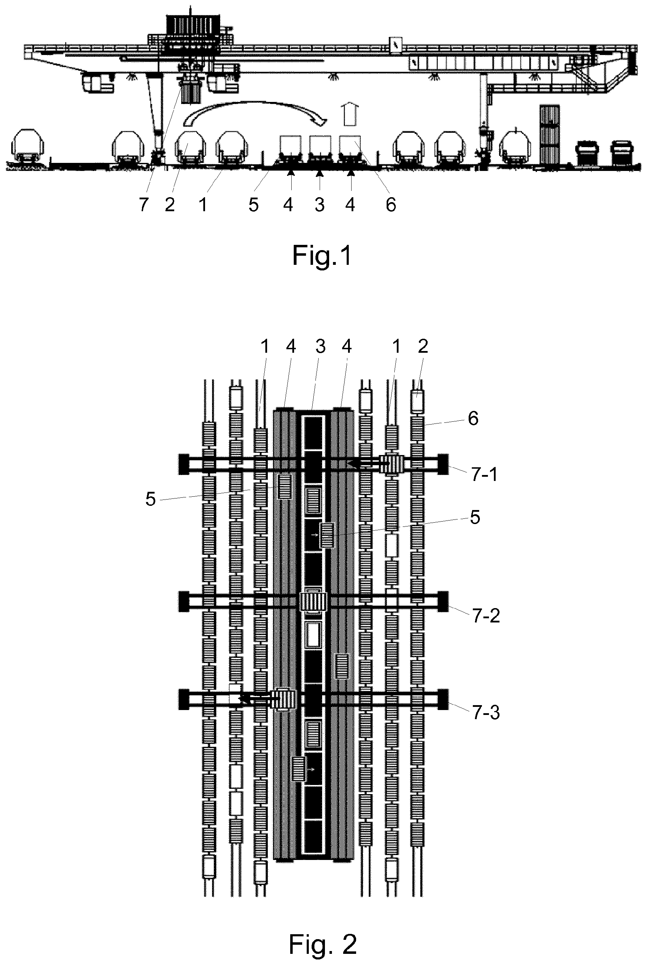

In Figur 1 der Zeichnung ist eine Variante der in Lehrte geplanten Sortieranlage zu sehen, die für einen Fachmann in der Projektvorstellung der DB Netz AG / DB ProjektBau GmbH I.NGG 2(N)/I.BV-MI-P(Z) vom 03.11.2014 näher erklärt wird.

Fig. 2 zeigt schematisch den schematischen Grundriss und die Funktion einer solchen geplanten Anlage. Zwischen den Gleisbündeln befindet sich unter den Portalkränen auf einer Länge von etwa 700 m eine völlig automatisch arbeitende Sortieranlage, deren Transportfahrzeuge (ARV, Automatic Rail Vehicle) die Ladeeinheiten in Längsrichtung genau zur jeweiligen Umladungsposition bringen, wenn eine direkte Umladung zwischen zwei Zügen nicht möglich ist. Wie ersichtlich, befindet sich in der Mitte ein Zwischenlagerplatz 3, der zur vorübergehenden Lagerung der Ladeeinheiten 6 dient und dazu geeignet ist, automatische Fahrzeuge 5 zu empfangen. Zu beiden Seiten der Zwischenlagerplatz 3 befindet sich je ein Sortiergleis 4, auf dem sich die automatischen Fahrzeuge bewegen können und darüber hinaus im dargestellten Fall je drei Eisenbahngleise 1, auf denen die Züge mit den beladenen Waggons (schraffierte Rechtecke) oder leeren Waggons (leeres Rechteck), sowie die zur Querbewegung notwendigen Portalkräne 7 die gesamte Anlage überbrücken. Im mittleren Teil der Abbildung wurde mit 7-1 der Portalkran bezeichnet, der gerade eine Ladeeinheit 6 vom Eisenbahnwaggon 2 auf das auf dem Zwischenlagerplatz 3 wartende automatische Fahrzeug 5 lädt, der mit 7-2 bezeichnete Portalkran 7 von einem auf dem Zwischenlagerplätze 3 stehenden automatischen Fahrzeug 5 eine Ladeeinheit 6 aufnimmt und der mit 7-3 bezeichnete Protalkran 7 eine Ladeeinheit 6 vom Zwischenlagerplatz 3 über das Sortiergleis 4 hinweg auf den Eisenbahnwaggon 2 lädt. Der Zwischenlagerplatz 3 dient auch zur Pufferung der Ladeeinheiten und löst somit das Problem der Zeitdifferenz zwischen der Ankunft der automatischen Fahrzeuge und dem Entladen durch den Portalkran, sowie der Wiederbeladung durch den Portalkran.

Allgemein gilt, dass Portalkräne entsprechend dem heutigen Stand der Technik nicht aneinander vorbei fahren können. Deshalb muss eine Lösung gefunden werden, die es ermöglicht, eine Ladeeinheit, in der Beschreibung der Einfachheit halber Container genannt, zwischenzeitlich auf ein Transportfahrzeug lädt und den Container in den Wirkungsbereich eines anderen Portalkranes bringt, der nun den Container problemlos aufnehmen und auf dem Waggon, beziehungsweise Zug anordnen kann, der ihn zum angegebenen Ziel bringt.

Das Ladespiel eines Portalkranes beträgt etwa vier Minuten. Innerhalb dieses Zeitraumes muss der Container zum Umladen vorbereitet werden, damit der Portalkran diesen aufnehmen und zur Zielposition bringen, dort einen anderen Container aufnehmen und auf dem gerade geleerten Transportfahrzeug absetzen kann.

In der in Lehrte geplanten Sortieranlage sollen sechs und im Endausbau neun Portalkräne in Betrieb genommen werden. Das bedeutet, dass die Sortieranlage so gestaltet werden muss, dass innerhalb von vier Minuten 18 Container, als pro Minute 4,5 Container bewegt werden können.

Das kann nur so erreicht werden, wenn entsprechend Fig. 1 der Portalkran 7 mit einer Bewegung nach Pfeil 8 den Container auf dem automatischen Fahrzeug 5 absetzt, dieses den Container mit einer Bewegung nach Pfeil 9 an die Stelle bringt, an der der Container von einem anderen Portalkran 7 aufgenommen und zur Zielposition gebracht werden kann.

Mit diesem Verfahren soll das Sortieren der Container mit einer solchen Geschwindigkeit erfolgen können, die dem Umsteigen von Reisenden im Personenverkehr nahe kommt. Mit den umsortierten Containern entsteht nun wieder ein Ganzzug, der trotz des Umsortierens den Container schneller zum Zielbahnhof bringen kann, als das auf der Straße möglich wäre. Damit wird nicht nur Zeit eingespart, sondern auch der Ausstoß von umweltschädlichen Gasen gesenkt und auf den Autobahnen Staus und Unfälle vermieden.

In solchen Anlagen werden alle am Umladen beteiligten Komponenten von einem übergeordneten Materialflußrechner gesteuert. Dieser berechnet anhand der ankommenden und abfahrenden Züge und einer optimalen logistischen Sortierstrategie die Umladebefehle für die Portalkräne, fertigt auch die Fahrpläne für die automatischen Fahrzeuge an und koordiniert gleichzeitig alle Bewegungen dieser Sortierfahrzeuge. Die Übergabe der Befehle und Steuersignale erfolgt über ein drahtloses Netzwerk, wie es z.B. in DE 10353455 A1 beschrieben ist.

Die Informationen, die vom Materialflußrechner für die Planungs- und Steuerungsprozesse benötigt werden, wurden von Knut Alicke, Dieter Arnold in "Optimierung von mehrstufigen Umschlagsystemen", Universität Karlsruhe, Institut für Fördertechnik und Logistiksysteme, beschrieben; weiterhin in Alicke Knut: "Modellierung und Optimierung des intermodalen Terminals Mega Hub", Universität Karlsruhe, Institut für Fördertechnik und Logistiksysteme (2000) beschrieben, das über folgenden Link abrufbar ist: http://www.win-fo.tu-bs.de/qor/tagung31/vortrag_hamburg/alicke.pdf

Ein schienenbasiertes Containersortiersystem wird auch in der Patentschrift DE 10353455 A1 beschrieben. Nach diesem Konzept verkehren automatische Transportwagen auf Schienen, die sowohl in Längsals auch in Querrichtung angeordnet sind. Die völlig passiv verkehrenden Wagen werden mit Linearmotoren bewegt und positioniert. An den Kreuzungspunkten der Längs- und Querschienen können die Wagen im rechten Winkel bewegt werden, indem die Räder der Wagen von Längs- in Querrichtung (oder umgekehrt) gedreht werden. Die Bewegung in Querrichtung erfolgt ebenfalls mit Linearmotoren. Zwischen den beiden Sortiergleisen wurde für die Transportwagen ein Zwischenlagerplatz eingerichtet, auf denen die Transportwagen mit Hilfe von Portalkränen geleert oder beladen werden können. Eine mit Linearmotoren ausgestattete Sortieranlage ist nur dann vorteilhaft, wenn der Sortierbedarf sehr groß ist und dementsprechend die Sortieranlage über viele Kräne und Transportwagen verfügt. Dazu sind nämlich bei einer Länge der Anlage von 700 m sehr viele Statoren der Linearmotoren anzuordnen, damit die für die Wagen notwendige Antriebskraft überall verfügbar ist. Für die Querbewegungen und auf den Zwischenlagerplätzen sind ebenfalls Statoren notwendig, die an der ursprünglichen Aufgabe der Sortieranlage und somit am Längstransport zu den Portalkränen eigentlich nicht teilnehmen.

Die vielen Statoren müssen über Frequenzrichter gespeist werden, darüber hinaus müssen sie über programmierbare Steuerungen (SPS) verfügen und müssen mit Hilfe von zahlreichen Leistungsmagnetschaltern umgeschaltet werden. Unter den Rollwagen ist ein ständiger Magnet, der Sekundärteil des Stators anzuordnen. Eine solche Sortieranlage erfordert ein stabiles Betonfundament, damit eventuell auftretende Bodensenkungen den Luftspalt des linearen Antriebs nicht verändern und somit zu Berührungsschäden führen. Weiterhin müssen für die genaue Einhaltung des Luftspaltes zwischen dem Wagen und dem Stator alle Schwellen gesondert mit Beton untergossen werden, was einen hohen Aufwand an lebendiger Arbeit erfordert. Das System erfordert eine spezielle Gestaltung der Schienen, bei denen die Räder aus doppelten Radscheiben bestehen, zwischen denen sich die leitende Schiene befindet. Zum Verdrehen der Räder müssen die Wagen zuerst auf Stützstempel gestellt werden, danach sind die Räder anzuheben, zu verdrehen und wieder abzusenken. Zur weiteren Bewegung muss das Gewicht des Wagens wieder auf die Räder verlagert werden.

Es ist auch eine Lösung bekannt, die ebenfalls mit Linearmotoren arbeitet und bei der die Transportwagen sowohl in Längs- als auch in Querrichtung auf normalen Eisenbahnschienen verkehren. Der Unterschied zur vorhergehenden Lösung besteht darin, dass hier normale Eisenbahnräder verwendet werden, die um einen Zapfen verdreht werden. Dazu müssen in die Längsgleise pro Zwischenlagerplatz jeweils vier Drehscheiben eingebaut werden. Wenn der Transportwagen den berechneten Zwischenlagerplatz erreicht hat, bleibt dieser auf den Drehscheiben stehen. Neben den Drehscheiben befindet sich ein hydraulischer Hebezylinder, mit dem die Räder entlastet werden, so dass diese leicht verdreht werden können und der Wagen wieder abgesenkt und nun in Querrichtung rollen kann.

Solche Sortieranlagen haben den Nachteil, dass pro Zwischenlagerplatz in jedem Gleis je vier Drehscheiben anzuordnen sind. In der dargestellten Sortieranlage in Lehrte würde das 280 Drehscheiben bedeuten, die alle elektrisch angetrieben werden müssen. Pro Drehscheibe ist ein Hydraulikzylinder notwendig, mit dem der gesamte Wagen angehoben werden kann. Wenn davon auch nur ein einziges Element ausfällt. würde das den Umschlagvorgang erheblich einschränken.

Es sind auch Lösungen bekannt, bei der Rollenbahnen und Stahlkonstruktionen zur Anwendung kommen, bei denen sich aber der Investitionsaufwand in ähnlichen Größenordnungen bewegt, wie bei der vorstehenden Lösung, so dass diese nicht mit Erfolg zur Anwendung gekommen sind.

In DE 19633238 B4 wird ein selbstfahrendes automatisches Containertransportfahrzeug beschrieben, das seine Fahrtrichtung von Längs- und Querrichtung und umgekehrt ändern kann, indem nach einem Halt des Fahrzeugs die Räder in die gewünschte Richtung verdreht werden und das Fahrzeug danach seine Fahrt fortsetzt. Zum verdrehen der Räder muss das gesamte Fahrzeug einschließlich der Last angehoben werden, danach lassen sich die Räder verdrehen, dann muss das Fahrzeug wieder abgesetzt werden. Dieser Vorgang erfordert große Kräfte, die sich nur mit langsam arbeitenden Hydraulikpumpen erreichen lassen.

DE 202010001496 U1 beschreibt eine Sortieranlage mit einem mittleren Gleis, in der die Überfahrt von den beiden äußeren Gleisen auf das mittlere Gleis über Weichen erfolgt und von dort aus weiter auf das andere äußere Gleis. Mit einer solchen Anlage lässt sich der gleiche Materialfluss verwirklichen, wie bei den vorstehend beschriebenen Lösungen. Eine solche Anlage erfordert aber im Falle der geplanten Kapazität 280 Weichen. Wegen des Wartungsaufwandes lässt sich ein solches System aber schwer behandeln. Diese Variante ließe sich auch mit weniger Weichen verwirklichen, das erfordert aber, dass der Transport der Container nicht einzeln, sondern im Verbund erfolgen muss und dieser Verbund auf dem mittleren Gleis auch verschoben werden kann. Diese Version hat sich aber wegen der Kompliziertheit des Sortierprogramms nicht durchgesetzt.

Es gibt auch solche schienengebundene Shuttle-Fahrzeuge, die nicht mit Linearmotoren angetrieben werden. Der CargoMover von Siemens wird mit einem Dieselmotor angetrieben, im Rahmen des europäischen Forschungs- und Entwicklungsprojekts "ASAPP-ONE" werden die Shuttle-Fahrzeuge über einer seitlich angeordnete Stromschiene angetrieben, von der die Stromabnahme ähnlich wie bei der U-Bahn erfolgt und die Lücken in der Schiene mit Akkumulatoren überbrückt werden. Beide Shuttlefahrzeuge wurden für den automatischen fahrerlosen Betrieb mit einer Geschwindigkeit von 80 km/h, beziehungsweise 50 km/h konzipiert und sind somit für den Umschlag auf engem Raum als überdimensioniert zu betrachten.

Es gibt auch Lösungen, bei denen die Last seitlich bewegt werden kann. Bei diesen Lösungen wird aber lediglich die Last bewegt, der gesamte Waggon oder Fahrzeug jedoch nicht. Für die meisten derartigen Fahrzeuge ist es charakteristisch, dass das Auf- und Abladen relativ langsam erfolgt, so dass sie für ein schnelles Umladesystem nicht geeignet sind. Weiterhin verbleibt das Transportfahrzeug auf den Gleisen und behindert somit die Bewegung der anderen Transportfahrzeuge.

Der vorliegenden Erfindung kommt als technische Lösung die in der Patentschrift US 4,060,035 A beschriebene Variante am nächsten, in der das gesamte Fahrzeug auf einer ebenen Fläche bewegt werden kann. Bei dieser Lösung werden die Eisenbahnräder mit hydraulisch betätigten Armen angehoben, so dass das gesamte Fahrzeug von Rädern mit speziellen elastischen Reifen getragen wird. Auf einer ebenen Fläche erfolgt der Antrieb der großformatigen Räder mit einem Hydraulikmotor, mit dem das Fahrzeug auch seitlich bewegt werden kann. Wenn das Fahrzeug wieder auf die Schienen gesetzt werden soll, müssen sich die Eisenbahnräder genau über den Schienen befinden. Das Umschalten auf den Schienenbetrieb erfolgt in der Form, dass die Eisenbahnräder nach unten gedrückt werden. Da kann aber nur so erfolgen, wenn das gesamte Fahrzeug so weit angehoben wird, dass die für den Straßenverkehr geeigneten Räder in der Luft schweben. Dieses System hat den Nachteil, dass von der Hydraulik das gesamte Fahrzeug einschließlich der Last angehoben werden muss. Dieser Vorgang erfordert große Kräfte, die nur mit entsprechend kräftigen Hydraulikpumpen erreicht werden können, die relativ langsam arbeiten, da sie nur so in der Lage sind, die relativ große Last anzuheben. Das ist eines der Hauptprobleme, das mit der Erfindung behoben werden soll. Das vorstehend beschriebene Fahrzeug kann nicht selbständig auf Schienen fahren und muss deshalb mit einer Lokomotive gezogen oder geschoben werden. Die Bewegung auf der ebenen Fläche erfolgt mit Hydraulikmotoren, deren Energiequelle im Dokument nicht erwähnt wird. Man kann aber davon ausgehen, dass die Energie aus einem Akkumulatorblock gewonnen wird, aus dem sich Nachteile ergeben, wie sie im Zusammenhang mit dem akkumulatorbetriebenen Lastkraftwagen bereits beschrieben wurden. Das Fehlen eines Fahrzeugs, das sich schnell und zuverlässig in Querrichtung bewegen kann, ist das zweite Hauptproblem, das mit der Erfindung behoben werden soll.

Die gestellte Aufgabe wird mit einem Verfahren gemäß den Merkmalen des Anspruchs 1, sowie mit dem im Anspruch 5. beschriebenen automatischen Schienenfahrzeug (ARV, Automatic Rail Vehicle) gelöst.

Vorteilhafte Weiterbildungen der Erfindung sind in den Unteransprüchen angegeben.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1: einen in der Einführung erwähnten leicht geänderten Querschnitt der bei Lehrte geplanten Sortieranlage,
- Fig. 2: einen Gleisplan und ARV-s der in Fig. 1 dargestellten Anlage,
- Fig. 3: einen sich zwischen zwei Längsgleisen befindlichen Zwischenlagerplatz zur Aufnahme der beschriebenen Fahrzeuge und die zum Antrieb der automatischen Fahrzeuge notwendige Stromversorgung mit den notwendigen Stützen,
- Fig. 4: eine schematische Darstellung eines gemäß der Erfindung ausgeführten Fahrzeugs in der Seitenansicht,
- Fig. 5A: einen in Fig. 4 angegebenen Schnitt A-A,
- Fig. 5B: einen in Fig. 4 angegebenen Schnitt B-B,
- Fig. 6: ein in der Fig. 4 dargestelltes Fahrzeug gemäß der Erfindung in einem für die Längsfahrt geeigneten Zustand,
- Fig. 7: ein in der Fig. 4 dargestelltes Fahrzeug gemäß der Erfindung in einem Zustand für den Beginn der Querfahrt,
- Fig. 8: ein in der Fig. 4 dargestelltes Fahrzeug gemäß der Erfindung während der geschobenen Querfahrt,
- Fig. 9: ein in der Fig. 4 dargestelltes Fahrzeug gemäß der Erfindung während der gezogenen Querfahrt, und
- Fig. 10: ein in der Fig. 4 dargestelltes Fahrzeug gemäß der Erfindung im Ruhezustand auf dem Zwischenlagerplatz.

Im Folgenden wird eine mögliche vorteilhafte Ausführung des Fahrzeuges 5, sowie die damit verbundenen ergänzenden Lösungen, die überall dort zur Anwendung kommen können, wo Ladeeinheiten, besonders Container und Tauschbehälter sortiert werden müssen, dargestellt. Das entsprechend der Erfindung beschriebene Fahrzeug kann besonders vorteilhaft in nach dem MegaHub-System arbeitenden Containerterminals verwendet werden.

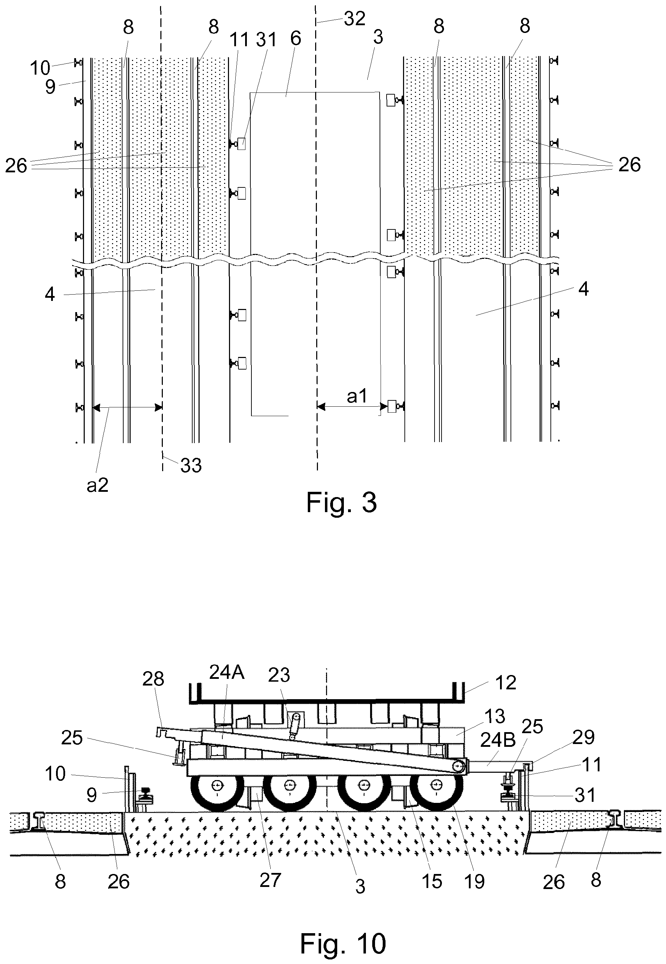

Der Stand der Technik und die Umgebung, in der ein Fahrzeug 5 (Automatic Rail Vehicle, ARV) verwendet werden kann, sind anhand der Abbildungen Fig. 1 und Fig. 2 bereits dargestellt. Fig. 3 ist die schematische Darstellung der möglichen Anwendungsumgebung für das erfindungsgemäße Fahrzeug, die dem Verständnis des Aufbaus und der Funktion des vorgeschlagenen Fahrzeugs dient.

Im mittleren Teil von Fig. 3 befindet sich ein Zwischenlagerplatz 3, der hier als Rechteck dargestellt ist und auf dem sich eine Ladeeinheit 6 befindet. An den Seiten des Zwischenlagerplatzes 3 befindet sich je ein Sortiergleis 4, dessen Schienen 8 leicht zu erkennen sind. Zur Bewegung des vorgeschlagenen Fahrzeugs 5 sind bestimmte Gegenstücke notwendig, die sich an der äußeren Seite der Sortiergleise 4 und am Rand des Zwischenlagerplatzes 3 befinden. An der äußeren Seite der Sortiergleise 4 befindet sich eine Art Geländer, das von Stützen 10 getragen wird und das im vorliegenden Beispiel eine Stromschiene 9 trägt, die dort an sich bekannter Weise isoliert befestigt ist. An der inneren Seite des Sortiergleises 4 sind neben dem Zwischenlagerplatz 3 weitere Stützen 11 eingelassen, die sich in größeren Abständen voneinander befinden und als steife Geländerstücke kurze Stromschienenstücke 31 tragen. Diese Stromschienenstücke 31 sind an der Stütze 11 ebenfalls mittels Isolatoren befestigt.

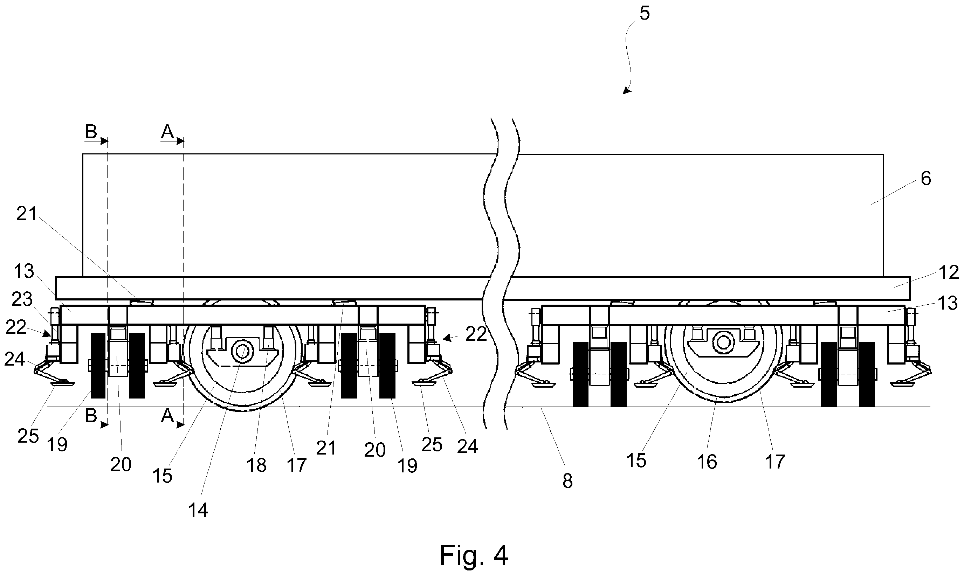

In Fig. 4 ist eine vorteilhafte Ausführung des automatischen Fahrzeugs 5 in der Seitenansicht dargestellt. Die Abbildung zeigt einen Wagenrahmen 12, der gleichzeitig die Ladefläche des Fahrzeugs 5 bildet, darauf befindet sich eine Ladeeinheit 6. Unter dem Wagenrahmen 12 befinden sich in der dargestellten Ausführung zwei als Fahrgestell ausgebildete Hilfsrahmen 13, in denen je eine Achse 14 in Kugellagern befestigt ist. Die Hilfsrahmen 13 befinden sich im Bereich an den Enden des Wagenrahmens 12 und sind unabhängig voneinander beweglich. Wenn das Fahrzeug 5 als Drehgestellwagen ausgeführt ist, stehen die Drehgestelle mit dem Hilfsrahmen 13 in Verbindung. An den Achsen 14 sind bei der Eisenbahn übliche Räder 15 angebracht, die in bekannter Weise über eine Lauffläche 16 und einen Spurkranz 17 verfügen. Die Achse 14 ist über ein Bewegungselement 18 mit dem Hilfsrahmen 13 verbunden. Am Hilfsrahmen 13 sind auf beiden Seiten des Rades 15 im Winkel des Hilfsrahmens 13 Stützräder 19 gelagert, die ebenfalls über Bewegungselemente betätigt werden können. Die Stützräder 19 ermöglichen eine ausschließlich gradlinige Bewegung auf eine später noch beschriebene Art und Weise, so dass diese ohne eine spezielle Lauffläche als hoch belastbare Vollgummiräder ausgeführt werden können, wobei aber auch normale Luftgummireifen zur Anwendung kommen können.

Zur betriebsmäßigen Funktion und Nutzung des Fahrzeuges 5 sowie im Interesse der Erhöhung der Sicherheit ist es vorteilhaft, mindestens eins der Stützräder mit die Drehbewegung verhinderten Feststellmitteln, z.B. einer Bremse auszurüsten, die aber auch ferngesteuert gestaltet werden kann.

Der Hilfsrahmen 13 ist über ein Federelement federnd mit dem Wagenrahmen 12 verbunden, in der Abbildung mit den Federn 21 bezeichnet, die mit einem in der Abbildung nicht sichtbaren, als Zapfen ausgebildeten Verbindungsglied angeordnet sind und in eine im Wagenrahmen 12 ausgebildeten Aufnahme in der Form hineinragen, dass sie sich darin senkrecht bewegen können, die seitliche Bewegung aber von der Aufnahme unterbunden wird. Bei einer anderen Ausführungsform kann der Führungsstift auch als Dämpfungsglied ausgeführt werden, in diesem Fall kann das Federelement eventuell sogar entfallen. Das bedeutet die Anwendung von Lösungen, die einem Fachmann bekannt sein sollten.

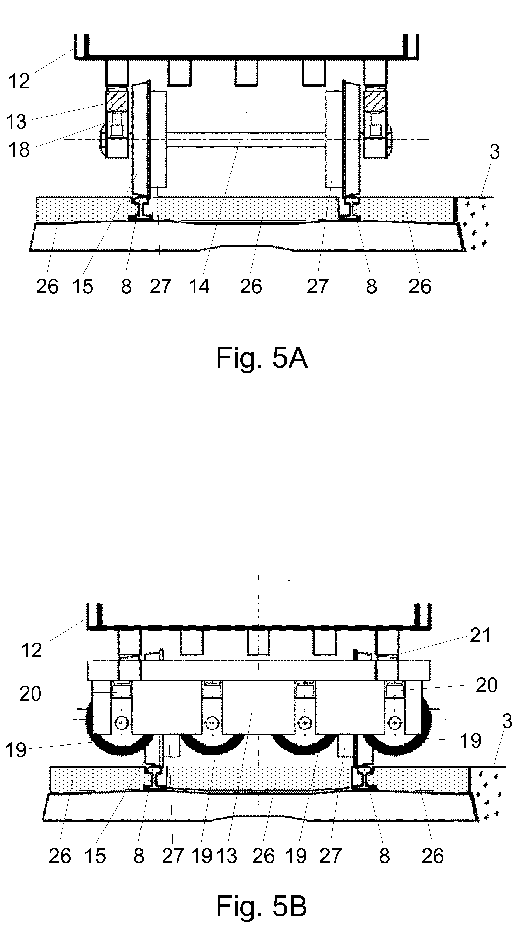

In der dargestellten Ausführung wurden im Hilfsrahmen 13 links und rechts des Rades 15 je zwei Bewegungskonstruktionen 22 angebracht. Jede Bewegungskonstruktion 22 beinhaltet als ein Betätigungsorgan eine Hydraulik 23 und einen Bewegungsarm 24, an dessen Ende ein mit einem Gelenk befestigter Stromabnehmer 25 integriert wurde. In Fig. 4 ist auf der linken Seite der Zustand dargestellt, in dem das Rad 15 des Fahrzeugs 5 im normalen Betriebszustand auf der Schienenoberkante 8 ruht, beziehungsweise abrollt und die Stützräder 19 in keiner Weise mit dem Sortiergleis 4 in Verbindung stehen, während auf der rechten Seite der andere Betriebszustand zu sehen ist, in dem das Rad 15 von der 'Schiene 8 abgehoben wurde und das Fahrzeug 5 auf den Stützrädern ruht. Dieser Vorgang ist mit Hilfe der Schnitte A-A und B-B in den Abbildungen Fig. 5A und 5B ausführlicher dargestellt. In Fig. 5A ist zu sehen, dass die Lauffläche 16 der Räder 15 mit der Schienenoberkante 8 in Verbindung steht, das Fahrzeug also in herkömmlicher Weise abrollen und bewegt werden kann. Das wird von den Stützrädern nicht behindert, die wie in Fig. 5B ersichtlich sich oberhalb der von der Schienenoberkante und den in die Schienen eingelegten Erhöhungselementen eine ebene Fläche bilden, die sich in der gleichen Höhe befindet, wie der Zwischenlagerplatz 3.

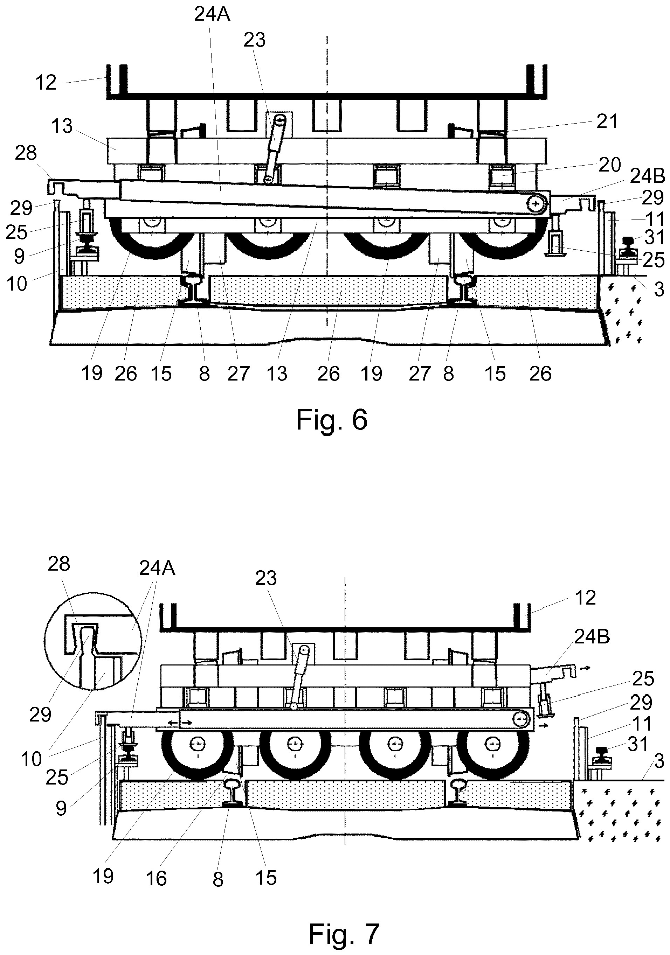

In Fig. 6 ist der gleiche Zustand zu sehen, wie in den Abbildungen 5A und 5B, jedoch enthält die Abbildung auch die Konstruktion, mit der das Fahrzeug der Erfindung entsprechend in Querrichtung bewegt werden kann. Die Abbildung zeigt das Fahrzeug 5 in dem Zustand, in dem die Räder 15 rollen oder das Fahrzeug 5 steht. Die als Bewegungskonstruktion 22 dienenden Arme 24A und 24B stehen noch nicht mit den fest installierten Gegenständen für die seitliche Bewegung, den Stützen 10 und 11 in Verbindung.

Das erfindungsgemäße Fahrzeug 5 wird von einem in ein Drehgestell oder an der Achse 14 befestigten direkt angetriebenen Motor 27 bewegt oder auch gebremst und über die seitlich der Sortiergleise 4 angeordneten Stromschienen 9 mit elektrischer Energie versorgt. Der Direktantrieb besteht aus einem kommutatorlosen Elektromotor 27 - zum Beispiel einem BLCD-Motor - der gleichzeitig das Bremssystem des Fahrzeugs 5 bildet. Die Bewegungskonstruktion 22 des erfindungsgemäßen Fahrzeugs 5 kann in einer für einen Fachmann leicht auszuführenden Form auch aus einer unabhängigen Energiequelle, z.B. einem Akkumulatorpack betrieben werden, beide Antriebsarten können auch kombiniert werden.

Neben den bei der Eisenbahn üblichen Achsen 14 werden im Hilfsrahmen 13 hoch belastbare Stützräder verwendet, die eine Querbewegung des automatischen Fahrzeugs 5 mit der vollen Traglast, also der Ladeeinheit 6 ermöglicht. Wenn das automatische Fahrzeug 5 die vorgesehene Position neben dem Zwischenlagerplatz 3 erreicht hat, wird das automatische Fahrzeug 5 mit Hilfe von Transpondern, die von anderen Sortieranalgen her bekannt sind oder anderen einen punktgenauen Halt ermöglichenden Ausrüstungen angehalten.

Wenn das automatische Fahrzeug 5 auf dem Sortiergleis 4 am vorgesehenen Punkt angehalten hat, werden die Stützräder 19 mit einer geeigneten, bekannten Hydraulik nach unten bewegt, bis deren Lauffläche auf den bei Bahnübergängen üblichen Einlageelementen 26 aufsetzen, die mit dem Zwischenlagerplatz 3 eine Ebene bilden. Statt der für Bahnübergänge verwendbaren Einlageelemente 26 können auch in ein Betonbett eingegossene Straßenbahnschienen oder ein anderes Verfahren verwendet werden, mit denen eine mit der Schienenoberkante 8 in gleicher Höhe befindliche Fläche gebildet werden kann und auf der Fahrzeuge mit hoher Last verkehren können.

Die hydraulischen Hebeeinrichtungen 20 sind mit den hydraulischen Hebeeinrichtungen 18 direkt miteinander verbunden und können so die im Hilfsrahmen 13 befindlichen Eisenbahnachsen oder im gegebenen Fall das gesamte Drehgestell anheben. Die Hebeeinrichtungen 18 befinden sich anstelle der bei der Eisenbahn verwendeten Federn. Die von Hydraulikantrieb entwickelte Kraft wird, nachdem die Stützräder 19 die Bodenoberfläche, genauer gesagt die Einlageelemente 26 erreicht haben, ohne jeden Eingriff oder hydraulischer Umschaltung in den Hydraulikzylindern 18 wirksam, so dass nun die Eisenbahnräder angehoben werden, bis zwischen dem Spurkranz 17 und der Schienenoberkante 8 ein Abstand entsteht, der ausreicht, um das automatische Fahrzeug 5 problemlos im rechten Winkel zum Sortiergleis 4 bewegt werden kann. Die Funktion der Hebeeinrichtungen 18 und 20 kann z.B. mit Positionsmeldern oder Druckmeldern genau gesteuert und eingestellt werden. Der in der hydraulischen Hebeeinrichtung 20 während des Hebevorganges entstehende Druckabfall kann vernachlässigt werden, weil sich dieser nach dem Erreichen der Ebene des Zwischenlagerplatzes 3 wieder ausgleicht.

In dieser Position kann das automatische Fahrzeug 5 von einem später noch dargestellten hydraulischen Zylindersystem vom Sortiergleis 4 bewegt und auf den Zwischenlagerplatz 3 verschoben werden, von dem aus die Ladeeinheit 6 mit einem Portalkran 7 aufgenommen oder darauf abgesetzt werden kann.

Die bei Eisenbahnachsen übliche Federung kann hier zweckmäßigerweise nicht zur Anwendung kommen, da wenn die Hebeeinrichtungen 20 in Funktion treten, die sich entlastenden Federn die zum Anheben notwendige Höhe anwachsen ließen. Die Federn 21 wurden deshalb zwischen dem Hilfsrahmen 13 und den Wagenrahmen 12 für die Lastaufnahme für die Ladeeinheiten 6 angeordnet und sichern so die beim Be- und Entladen des automatischen Fahrzeugs 5 notwendige Federung. Damit erhöht sich zwar die ungefederte Masse im Hilfsrahmen 13, die sich aber kaum bemerkbar macht, weil das automatische Fahrzeug 5 in Längs- und Höhenrichtung auf völlig geraden Schienen fährt und somit keine Stöße oder Schwingungen entstehen, die abgefedert werden müssten.

Für die Bewegung in Querrichtung können vorteilhaft Stützräder mit Hartgummi-, Kunststoff- und Stahlreifen oder sonstigen für hohe Belastungen geeigneten Reifen zur Anwendung kommen. Wenn das automatische Fahrzeug 5 quer über die in Längsrichtung verlegten Schienen 8 fährt, entstehen nur geringe Stöße, weil sich die Last auf relativ viele Stützräder 19 verteilt und somit die Lücken zwischen den Schienen 8 und den Einlageelementen 26 problemlos überbrückt werden können, so dass hier keine mit Federn auszugleichenden Stöße entstehen können. Entstehende Stöße werden auch dadurch vermieden, dass mit der vorteilhaften Gestaltung der Hebeeinrichtungen 20 alle Stützräder nach unten gedrückt werden und somit die Stützräder eventuelle Unebenheiten ausgleichen können.

Da von dem hydraulischen Antrieb beim Absenken der Stützräder und beim Anheben der Bahnachsen lediglich die angeführten Komponenten bewegt werden, ist es unnötig, das gesamte automatische Fahrzeug 5 und damit auch der Ladeeinheit 6 senkrecht zu bewegen, deshalb ist zur Richtungsänderung des Fahrzeugs 5 weitaus weniger Zeit und Kraft notwendig als bei anderen Lösungen, was beim vorgeschlagenen Fahrzeug einen bedeutenden Vorteil gegenüber anderen Lösungen mit ähnlichem Ziel bedeutet, bei denen das gesamte Fahrzeug inklusive der zu tragenden Last angehoben, die Räder verdreht und das Fahrzeug wieder abgesenkt werden muss.

Die in Längsrichtung zu verlegenden Schienen 8 können völlig stoßfrei ausgeführt werden. Die Schienenlauffläche wird nicht unterbrochen und beinhaltet keine Herzstücke oder Kreuzungspunkte. Auf diese Weise ist es möglich, bei der Längsfahrt einen möglichst ruhigen Lauf zu erreichen. Weil die Schienen 8 keinerlei Kreuzungs- oder Weichenelemente enthalten, erfordert das Schienensystem kaum Wartungsarbeiten, die notwendigerweise immer mit Gleissperren und Betriebsunterbrechungen einher gehen. Die Sortiergleise 4 können sowohl in voller Länge, als auch nur an den für die Querfahrt notwendigen Stellen mit Einlageelementen 26 abgedeckt werden, die in erster Linie für Bahnübergänge verwendet werden, zum Beispiel mit unter dem Namen Strail bekannt gewordenen Elementen der Firma Strabag, statt dessen können aber auch in Beton eingelassene Straßenbahnschienen oder sonstige zwischen dem Schienenpaar und darum herum anwendbare Mittel verwendet werden, die mit Schwerlastfahrzeugen befahren werden können. Auf der so entstehenden Fläche kann das automatische Fahrzeug 5 quer zu den Schienen 8 fahren.

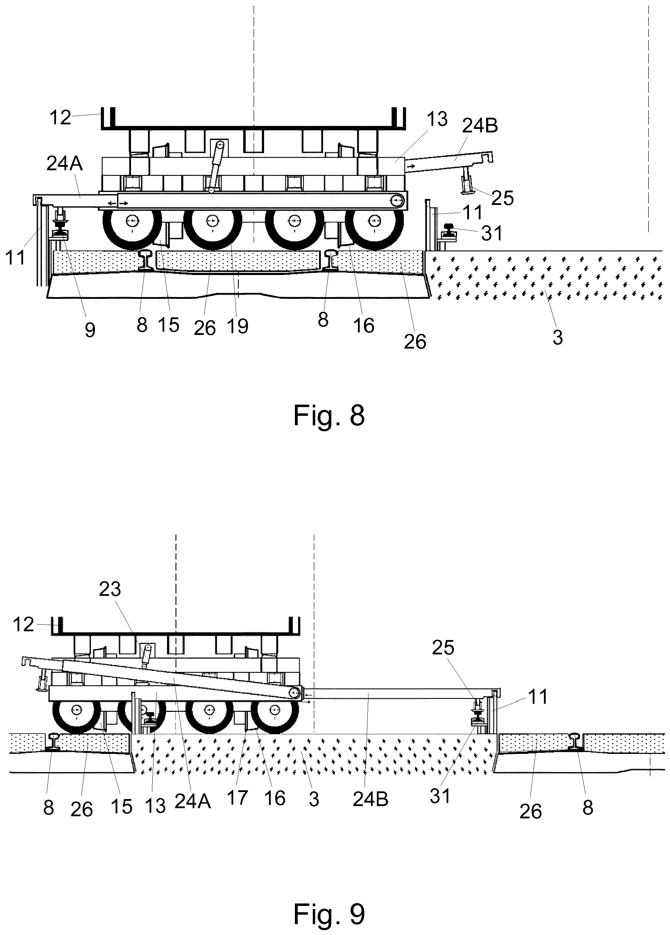

Die bei Straßenübergängen üblichen Einlageelemente verfügen über eine ausreichende Tragfähigkeit, so dass darauf ein mit einer Ladeeinheit beladenes automatisches Fahrzeug 5 problemlos quer bewegt werden kann. Dieser Vorgang ist schematisch in den Figuren 7 bis 10 näher dargestellt. Fig. 7 zeigt das Fahrzeug 5 in einem für die Querfahrt geeigneten Zustand in der Startposition: Das Fahrzeug 5 ruht auf den Stützrädern 19, einer der zur Querverschiebung dienenden Arme 24A ist in entsprechender Länge ausgeschoben und der als Funktionselement dienende Hydraulikzylinder wurde abgesenkt, so dass die sich am Ende des Armes befindliche gegen Abrutschen ausgebildete Nut auf der Stütze 10 gegen Abrutschen geschützt auf dem Stumpf 29 eingeklinkt werden kann und der Stromabnehmer 25 gleichzeitig den Kontakt mit der Stromschiene 9 herstellt, so dass damit die für die Pumpe des hydraulischen Antriebs und die Elektronik notwendige Energie zur Verfügung gestellt wird. In Fig. 8 ist ein Zustand dargestellt, in dem der Bewegungsarm 24A weiter heraus geschoben und dadurch das Fahrzeug 5 nach rechts auf den Zwischenlagerplatz 3 verschoben wurde. Dazu sind die am Rand des Zwischenlagerplatzes 3 eingelassenen Stützen 11 in einer solchen Entfernung voneinander anzuordnen, dass sie die Bewegung des Fahrzeugs 5 nicht behindern.

Die Arbeitslänge der Bewegungsarme 24 ist begrenzt, so dass diese ohne eine komplizierte Teleskoplösung nicht in der Lage wären, das Fahrzeug 5 voll und ganz auf den Zwischenlagerplatz 3 zu verschieben. Dieses Problem kann z.B. in einer dargestellten Form gelöst werden, indem ein zweiter Bewegungsarm 24B zweckmäßigerweise zusammen mit dem Bewegungsarm 24A heraus geschoben wird, bis dieser auf der anderen Seite auf dem Stumpf 29 der Stütze 11 eingeklinkt werden und ebenfalls über den Stromabnehmer 25 den Kontakt mit dem Stromschienenstück 31 herstellen kann. Wenn das erfolgt ist, kann der Kontakt des Armes 24A gelöst und sowohl der Kontaktarm 24A, als auch 24B eingezogen werden, wodurch der Arm 24A in die eingezogene Grundstellung gelangt, mit dem Arm 24B das Fahrzeug 5 wie in Fig. 10. gezeigt, in die Mitte des Zwischenlagerplatzes 3 gezogen wird.

Da das Fahrzeug 5 in der dargestellten Ausführungsform nicht über eine eigene Energiequelle verfügt, um das Fahrzeug 5 vom Zwischenlagerplatz 3 wieder weg zu bewegen, ist es notwendig, den Kontakt zwischen dem Fahrzeug 5 und dem System der Stromversorgung aufrecht zu erhalten. Das wird im angegebenen Beispiel so erreicht, indem der Arm 24B des Fahrzeugs 5 mit dem Stromabnehmer 25 in Verbindung mit der Stütze 11 und der Stromschiene 31 verbleibt.

Die Stützräder müssen in Abhängigkeit von ihrer Belastbarkeit in einer Stückzahl angebracht werden, mit der das Gesamtgewicht des automatischen Fahrzeugs 5 auf alle Stützräder 19 verteilt werden kann und somit keine schädliche Punktlast auf der befahrenen Oberfläche entsteht oder die Stützräder überlastet werden würden.

Zwischen den entsprechend den obigen Ausführungen gestalteten Sortiergleisen 4 ist es vorteilhaft, eine Drainasphaltoberfläche oder eine entsprechend strukturierte Betonoberfläche zu gestalten, mit der das Niederschlagswasser vom Zwischenlagerplatz 3 abgeleitet werden kann und das bei Bedarf auch eine Enteisungsanlage beinhalten sollte. Das Niederschlagswasser kann auch so vom Zwischenlagerplatz 3 abgeleitet werden, wenn die Oberfläche mit einer von Bahnsteigen her bekannten Neigung ausgeführt und das Wasser in einen Sammelkanal abfließt.

Da das automatische Fahrzeug 5 nur kurzzeitig zum Ent- und Beladen auf dem Zwischenlagerplatz 3 verbleibt, ist es nicht notwendig, die Stützräder 19 zu entlasten. Wenn das Fahrzeug 5 jedoch für längere Zeit abgestellt wird, kann es vorteilhaft sein, die hydraulischen Hebeeinrichtungen 20 zu entlasten. Dazu kann es vorteilhaft sein, in der Mitte des Zwischenlagerplatzes 3 Schienenstücke oder im Beton oder Drainasphalt solche Vertiefungen vorzusehen, in denen die Räder 15 so positioniert werden können, dass die Last des Fahrzeugs 5 den Spurkranz 17 der Räder 15 nicht belastet. Auf dem Zwischenlagerplatz 3 wird das automatische Fahrzeug 5 nicht in Längsrichtung bewegt, so dass die zum Abstellen notwendigen Vertiefungen kurz gehalten werden können.

Der sich zwischen den beiden Sortiergleisen 4 befindliche Zwischenlagerplatz 3 kann von beiden Seiten her bedient werden und bildet so vorteilhafterweise den Kern der Sortieranlage.

Die Fahrt des automatischen Fahrzeugs 5 kann von einem Fachmann mit Hilfe von optischen, magnetischen oder Abstandssensoren gesteuert werden, so dass das automatische Fahrzeug 5 auf dem Zwischenlagerplatz 3 punktgenau abgestellt werden kann.

Nachdem der Portalkran 7 vom automatischen Fahrzeug 5 die darauf befindliche Ladeeinheit 6 abgenommen und danach eine andere Ladeeinheit 6 darauf abgesetzt hat, kann das Fahrzeug 5 soweit seitlich bewegt werden, bis es ein Sortiergleis 4 erreicht hat. Hier erfolgt die Positionierung des Fahrzeuges 5 in ähnlicher Weise, wie beim Erreichen des Zwischenlagerplatzes 3. Nach dem Absenken der Räder 15 erfolgt das automatische Anheben der Stützräder 19 und deren Verriegelung, danach kann das automatische Fahrzeug seine Fahrt in Längsrichtung fortsetzen.

Das automatische Fahrzeug 5 fährt so weit, bis es den Zwischenlagerplatz 3 erreicht hat, von dem ein anderer Portalkran 7 die Ladeeinheit 6 aufnehmen und auf einen anderen Eisenbahnwaggon 2 laden kann.

Die Bewegung des automatischen Fahrzeugs 5 in Querrichtung kann auch zum Beispiel mit einem elektrischen Antrieb der Stützräder 19 erfolgen. Dieses Verfahren erfordert Stromschienen auf dem Boden des Zwischenlagerplatzes 3 oder am Fahrzeug 5 und relativ viele Elektromotoren, deren Drehzahl im Interesse einer rechtwinkligen Verschiebung synchronisiert werden sollte. Deshalb ist es vorteilhaft, die Bewegung in Querrichtung wie im dargestellten Beispiel mit einer hydraulisch arbeitenden Bewegungskonstruktion 22 und den Bewegungsarmen 24 auszuführen, mit deren Hilfe das Fahrzeug 5 das Sortiergleis 4 verlassen und auf dem Zwischenlagerplatz 3 oder auch umgekehrt positioniert werden kann. Die Bewegungsarme 24 haben eine Doppelfunktion: Einerseits sichern sie die mechanische Verbindung zwischen den Stützen 10 oder 11 und dem automatischen Fahrzeug 5, andererseits sichern sie die Stromversorgung das automatischen Fahrzeugs 5 für die Bewegung in Querrichtung, sowie die Steuerungsorgane des automatischen Fahrzeugs.

Am Ende des Bewegungsarmes 24 befindet sich eine sich nach unten verjüngende Nut 28, auf der Stütze 10 für die Stromschiene 9 ein Stumpf 29, dessen Form komplementär zur Nut 28 ausgebildet wurde. Wenn der als hydraulischer Arbeitszylinder arbeitende Bewegungsarm 24 in seine Betriebsstellung abgesenkt wird - das erfolgt im dargestellten Beispiel mit einem Steuerorgan, in unserem Fall einem hydraulischen Arbeitszylinder - wird die Nut 28 auf den Stumpf 29 herab gelassen, da der Stumpf 29 sich ebenfalls nach unten verjüngt, kann er nicht aus der Nut 28 heraus rutschen. In Fig. 7 ist die Ausbildung der Nut 28 und des Stumpfes 29 vergrößert dargestellt.

Zur Herstellung der elektrischen Verbindung ist am Ende des Bewegungsarmes 24 ein Stromabnehmer 25 angeordnet, der vom Gewicht des Bewegungsarmes 24 und einer Feder auf die isoliert an der Stütze befestigten Stromschiene 9 drückt und somit das automatische Fahrzeug 5 mit Elektroenergie versorgt. Derartige Stromabnehmer 25 werden bei der Metro in Paris, Frankreich seit Jahren verwendet und verfügen über einen ausreichend großen Hub um bei der Längsfahrt des automatischen Fahrzeugs 5 und während der Querfahrt die wegen des Absenkens des Bewegungsarmes 24 entstehenden größeren Druckkräfte aufzunehmen. Da sich das automatische Fahrzeug 5 in diesem Augenblick nicht mehr in Längsfahrt befindet, entsteht am Stromabnehmer 25, beziehungsweise der Stromschiene 9 kein erhöhter Verschleiß durch Abrieb.

Die dargestellte mechanische und elektrische Verbindung kann selbstverständlich auch in anderer Form hergestellt werden.

Die Stützen 10 und 11 können vorteilhafterweise aus Eisenbahnschienen hergestellt werden und sind neben dem Sortiergleis 4 zum Beispiel einzubetonieren. Dazu sind zwei Schienenstücke so miteinander zu verbinden, dass damit die notwendige Steifheit der Stützen 10 und 11 für die Querfahrt des Fahrzeugs 5 entsteht. Die Schienenstücke sind so anzuordnen, dass vom Schienenfuß so viel zu entfernen ist, dass damit der Stumpf 29 entsteht, der nach oben zeigt und der Bewegungsarm 24 beim Absenken sich darauf einklinken kann. Die in den Abbildungen dargestellten Stützen 10 und 11 sind ohne die erwähnte Versteifung dargestellt.

Zum Verschieben auf den Zwischenlagerplatz 3 kann der Bewegungsarm 24 zusammen mit dem Stromabnehmer 25 nur so lang sein, dass der Bewegungsarm 24 in eingezogenem Zustand nicht aus dem Fahrzeug 5 unter dem Wagenrahmen 12 heraus ragt. Dieses Problem könnte mit Teleskophydraulikzylindern gelöst werden, die aber verhältnismäßig teuer sind. Deshalb ist es vorteilhaft, weitre Hydraulikarme 24 zu verwenden, die zusammen mit dem Beginn des Verschiebevorganges des Fahrzeugs 5 in Querrichtung nach außen gedrückt werden. Das Ende dieser Bewegungsarme 24 verfügt ebenfalls über einen Stromabnehmer 25 und eine Nut 28, mit der sich der Bewegungsarm 24 sich auf dem Stumpf 29 der Stütze 11 einklinkt. Am Rande des Zwischenlagerplatzes 3 sind weitere mit einem Stumpf 29 versehene Stützen 11 mit den daran isoliert befestigten kurzen Stromschienen 31 eingelassen, am besten einbetoniert, deren Abstand a1 von der gestrichelten Symmetrieachse 32 des Zwischenlagerplatzes 3 dem Abstand a2 zwischen der Stromschiene 9 und der ebenfalls gestrichelten Symmetrieachse 33 des Sortiergleises 4 entspricht. Die Stromschienenstücke 31 neben der Schiene 8 sind mit der Stromschiene 9 verbunden, während die Stützen 11 mit dem allgemeinen Schienensystem verbunden sind. Damit wird der Stromkreis sowohl mit der Stromschiene 9, als auch mit dem allgemeinen Schienensystem weiterhin aufrecht erhalten. Wenn die Verbindung zwischen dem Fahrzeug 5 und der Stütze 11 über den zweiten Bewegungsarm 24B hergestellt wurde, kann der erste Bewegungsarm 24A angehoben und vom Stumpf 29 neben dem Sortiergleis 4 gelöst und in die Ruhestellung eingezogen werden. Die Bewegungsarme 24 können lediglich dann ihre Bewegung zwischen dem Ruhezustand und dem aktiven ausgefahrenem Zustand unterbrechen, wenn eine Notabschaltung erforderlich wird.

Die auf der anderen Seite des automatischen Fahrzeugs 5 befindliche Hydraulik für den Bewegungsarm 24B wird nun so gesteuert, dass sie nicht auf Druck, sondern auf Zug belastet wird und somit das automatische Fahrzeug 5 weiter auf den Zwischenlagerplatz 3 zieht, bis dieses die Mitte des Zwischenlagerplatzes 3 erreicht.

Mit der vorteilhaften Anordnung der Bewegungsarmpaare 24A und 24B wird erreicht, dass mit dem Erreichen des Zwischenlagerplatzes 3 auch der Bewegungsarm 24A eingezogen ist und somit das Sortiergleis 4 schneller für die Durchfahrt eines anderen automatischen Fahrzeugs 5 frei wird, als dies mit Teleskophydraulikarmen der Fall wäre.

Die Anzahl der Bewegungsarmpaare 24A und 24B hängt von der Anzahl der das Fahrzeug tragenden Achsen 14, beziehungsweise der Anzahl der Hilfsrahmen 13 ab. Vorteilhafterweise werden pro Achse 14, beziehungsweise pro Hilfsrahmen 13 jeweils zwei Paare angewendet, weil damit die Bewegung des Fahrzeuges 5 im rechten Winkel zu den Sortiergleisen 4 gesichert werden kann.

Um die Bewegung im rechten Winkel noch besser im rechten Winkel zu erreichen sind die Bewegungsarme 24 zweckmäßigerweise am Hilfsrahmen 13 anzubringen. Eine Montage ist aber auch am Wagenrahmen 12 des automatischen Fahrzeugs 5 möglich.

Die am Rande des Zwischenlagerplatzes 3 befindlichen Stützen 11 mit den kurzen Stromschienen 31 sind so anzuordnen, dass sie das Abrollen der Stützräder 19 nicht behindern. Da sich die Ausrichtung des automatischen Fahrzeugs auf den Sortiergleisen 4 nicht ändert, verändert sich auch nicht der Versatz zwischen den Stützen 11, so dass das Fahrzeug 5 in beiden Richtungen fahren kann.

Da im Schienensystem der Sortieranlage keinerlei Kurven enthalten sind, können die automatischen Fahrzeuge 5 auch mit drei oder noch mehreren Achsen 14 ausgerüstete werden, um die Tragfähigkeit der automatischen Fahrzeuge zu erhöhen.

Die Anordnung der kurzen Stromschienen 31 an den Stützen 11 ermöglicht es, dass auf dem Zwischenlagerplatz 3 bei Wartungsarbeiten auch für den Straßenverkehr konzipierte Fahrzeuge verkehren können. Wenn zwischen den Sortiergleisen 4 die Schwellen in voller Länge des Gleises abgedeckt werden, können auch dort Wartungsfahrzeuge verkehren.

Für die Wartung der automatischen Fahrzeuge 5 ist es vorteilhaft, wenn der jeweils letzte Platz des Zwischenlagerplatzes 3 dafür vorgesehen wird, der mit einer in den Abbildungen nicht dargestellten Haube abgedeckt werden kann. Diese Haube schützt vor den daneben verkehrenden automatischen Fahrzeugen 5, obwohl im zentralen Steuerrechner diese Plätze als belegt zu markieren sind und somit kein Fahrzeug 5 dort vorbei fahren könnte. Diese Haube dient aber gleichzeitig auch als Schutz der Monteure gegen Witterungseinflüsse. Auf diesem Lagerplatz ist dann während der Wartungsarbeiten die Stromversorgung der kurzen Stromschienen 31 abzuschalten. Wenn die Wartungsarbeiten am Fahrzeug 5 dessen Stromversorgung betrifft, sind der Stromabnehmer 25 und alle damit in Verbindung stehenden Teile wie bei der Berliner S-Bahn abzudecken.

Für die Steuerung der automatischen Fahrzeuge 5 wird vorteilhafterweise eine drahtlose Datenverbindung zwischen dem Fahrzeug und dem Zentralrechner verwendet. Diese Verbindung dient in erster Linie für die Erfassung der Ladeeinheiten 6 auf den ankommenden Zügen, aber auch zur Übertragung der für den Sortiervorgang notwendigen Daten, die an die automatischen Fahrzeuge 5 und die Portalkräne zu übermitteln sind, welche Ladeeinheit 6 wohin gebracht werden muss. Weiterhin sind darüber auch die Zustandsdaten des automatischen Fahrzeugs zu übermitteln. Diese Berechnungen können mit einem Logistikprogramm erfolgen, das für die Funktion der Sortieranlage unbedingt notwendig ist, aber nicht Gegenstand dieser Erfindung ist.

Vorliegende Erfindung bietet für folgende Anforderungen eine vorteilhafte Lösung:
- Versorgung der in der Sortieranlage arbeitenden Portalkräne mit zum Sortieren vorgesehenen Ladeeinheiten über den Zwischenlagerplatz.
- Ununterbrochene Energieversorgung ohne eine Zwischenspeicherung von Energie.
- Alle für die Querfahrt notwendigen beweglichen Elemente wurden auf dem Fahrzeug angebracht, so dass bei Wartungsarbeiten die Sortieranlage voll weiter arbeiten kann.
- Bei Wartungsarbeiten soll die Betriebsunterbrechung möglichst kurz sein.
- Es sollen möglichst bei der Bahn übliche Bestandteile verwendet werden.
- Es sollen möglichst Bestandteile verwendet werden, die in der Industrie bereits erprobt wurden.

**Bezugszeichenliste**

| | | | |
|---|---|---|---|
| 1 | Eisenbahngleis | 18 | Hebeeinrichtung |
| 2 | Eisenbahnwaggon | 19 | Stützrad |
| 3 | Zwischenlagerplatz | 20 | Hebeeinrichtung |
| 4 | Sortiergleis | 21 | Feder |
| 5 | Fahrzeug | 22 | Bewegungskonstruktion |
| 6 | Ladeeinheit | 23 | Hydraulik |
| 7 | Portalkran | 24, 24A, 24B | Bewegungsarm |
| 8 | Schiene | 25 | Stromabnehmer |
| 9 | Stromschiene | 26 | Einlageelement |
| 10 | Stütze | 27 | Elektromotor |
| 11 | Stütze | 28 | Nut |
| 12 | Wagenrahmen | 29 | Stumpf |
| 13 | Hilfsrahmen | 31 | kurze Stromschiene |
| 14 | Achse | 32 | Symmetrieachse |
| 15 | Rad | 33 | Symmetrieachse |
| 16 | Lauffläche | a1 | Entfernung |
| 17 | Spurkranz | a2 | Entfernung |

## Patentansprüche

1. Verfahren mit einem Schienenfahrzeug (5) bevorzugt zur Anwendung in automatischen Containersortieranlagen mit mittig angeordneten Zwischenlagerplätzen (3), bei dem
- das Schienenfahrzeug (5) auf dem zum Zwischenlagerplatz (3) benachbarten Sortiergleis (4) zu einem im Voraus berechneten Platz bewegt wird,
- an diesem Platz die Räder (15) des Fahrzeugs (5) von den Schienen (8) des Sortiergleises abgehoben werden,
- das Fahrzeug (5) auf zum Be- und Entladen auf zusätzlichen Rädern in einer von der Längsrichtung abweichenden Richtung auf den Zwischenlagerplatz (3) bewegt wird,
**dadurch gekennzeichnet, dass**
- bei der Trennung der Räder (15) des Fahrzeugs (5) von den Schienen (8) des Sortiergleises (4) ein unabhängig von den die Ladeeinheit (6) tragenden Fahrzeugrahmen (12) die an einem Hilfsrahmen (13) befindlichen Stützräder (19) ohne Anheben des Fahrzeugrahmens (12) diese auf das Niveau des Sortiergleises (4) abgestützt werden und danach die Wagenräder (15) so weit angehoben werden, dass der Spurkranz (17) der Räder (15) über die Krone der Schienen (8) hinweg bewegt werden kann;
- während der Bewegung des Fahrzeugs (5) auf den Zwischenlagerplatz (3) zwischen dem Fahrzeug (5) und den neben dem Sortiergleis (4) angeordneten Geländegegenständen eine vorübergehende Verbindung hergestellt wird und das Fahrzeug (5) auf den Stützrädern (19) mit den eigenen Bewegungskonstruktionen (22) in einer zur Längsrichtung der Sortiergleise (4) in einem rechten Winkel dazu vom Sortiergleis (4) in Richtung Zwischenlagerplatz (3) geschoben und danach auf den Zwischenlagerplatz gezogen wird;
- das Fahrzeug (5) nach der Entladung, beziehungsweise der Beladung in einer zum Sortiergleis (4) senkrechten Richtung mit den eigenen Bewegungselementen vom Zwischenlagerplatz (3) in Richtung Sortiergleis (4) und danach auf die Schienen (8) des Sortiergleises geschoben wird,
- um die Stützräder (19) des Fahrzeugs (5) anheben zu können, die Räder (15) des Fahrzeugs (5) auf die Schienenkrone (8) des Sortiergleises (4) abgesenkt und danach die Stützräder (19) vom Sortiergleis (4) abgehoben werden; sowie
- das Fahrzeug (5) auf dem Sortiergleis (4) zu einem anderen zum im Voraus berechneten Zwischenlagerplatz (3) benachbarten Platz bewegt wird.

2. Verfahren nach Anspruch 1, **dadurch gekennzeichnet, dass** die Hebekonstruktionen (18, 20) für die Räder (15) des Fahrzeugs (5) und die Stützräder (19) durch eine miteinander verbundene Hydraulik in der Form betätigt wird, dass nach Beendigung der Funktion der einen Hebekonstruktion (18, 20) die damit verbundenen Stützräder (19) nach Erreichen ihres Endpunktes, beziehungsweise des Endpunktes des Rades (15) des Fahrzeugs (5) die Bewegung dieser Hebekonstruktion in entgegengesetzter Richtung und umgekehrt auslöst.

3. Verfahren nach Anspruchen 1 oder 2, **dadurch gekennzeichnet, dass** zwischen dem Fahrzeug (5) und den neben dem Sortiergleis (4) angeordneten Geländegegenständen eine vorübergehende physikalische Verbindung geschaffen wird, während die an den Wagenrädern (12) montierten ein oder mehrere Bewegungskonstruktionen (22) mit den als Geländegegenstand angeordneten Geländer mechanisch, beziehungsweise mit der Stromschiene (9) verbunden werden.

4. Verfahren nach Anspruch 3, **dadurch gekennzeichnet, dass** die am Ende der als Bewegungsarm (24) verwendeten Bewegungskonstruktion (22) befindliche Nut (28) abrutschfest auf die das Geländer tragende Stütze (11) auf einen Stumpf(29) eingeklinkt wird.

5. Schienenfahrzeug zur Anwendung in Containersortieranlagen mit in der Mitte angeordneten Zwischenlagerplätzen mit
- einem Wagenrahmen mit einer Ladefläche zur Aufnahme von mindestens einer Ladeeinheit,
- mindestens zwei Fahrgestellen, die über mindestens je eine Achse verfügen, die im Endbereich des Schienenfahrzeugs unterhalb des Fahrzeugrahmens angeordnet sind,
- Rädern auf den Achsen, mit denen der Wagenrahmen auf den Schienen läuft,
- einer mit den Fahrgestellen zugeordneten Federung,
- weiteren Rädern, die die Seitwärtsbewegung ermöglichen,
- mindestens einer Hebekonstruktion, mit der die Räder des Fahrzeugs von den Schienen abgehoben werden können,
**dadurch gekennzeichnet, dass**
- alle Fahrgestelle als Hilfsrahmen (13) ausgebildet sind, die beweglich unter dem Wagenrahmen (12) angeordnet sind,
- der Wagenrahmen (13) federnd auf den Hilfsrahmen (13) lagert,
- zu den Hilfsrahmen (13) und dem Wagenrahmen (12) ein Formstück zugeordnet wurde, das die waagerechte Position im Verhältnis zum Hilfsrahmen (13) und dem Wagenrahmen (12) fixiert,
- alle Hilfsrahmen (13) im Bereich der Ecken mindestens je ein senkrecht bewegliches Stützrad (19) beinhaltet, wobei die Stützräder frei drehbar in einer Ebene angeordnet sind, die sich senkrecht zur Längslinie des Fahrzeugs (5) befindet,
- die Stützräder (19) und die Rädere des Fahrzeugs (5) mit senkrechten Hebe- und Absenkeinrichtungen (18, 20) verbunden sind, wobei nach der Bewegung der Stützräder (19) oder der Räder (15) des Fahrzeugs (5) nach Erreichen ihrer Endposition die entgegengesetzte Bewegung der anderen Bewegungselemente (20, 18) und umgekehrt auslösen,
- das Fahrzeug (5) über mindestens ein pneumatisch oder hydraulisch betätigtes Bewegungselement (22) verfügt, das entweder am Hilfsrahmen (13) oder am Wagenrahmen (12) befestigt ist, damit das Fahrzeug (5) senkrecht zur Längsrichtung auf den Stützrädern (19) abrollen kann, wobei das Bewegungselement über mindestens ein Mittel verfügt, das so gestaltet ist, das vorübergehend lösbar mit einem Geländegegenstand verbunden werden kann, der neben dem Fahrzeug (5), den Schienen (8) und dem Zwischenlagerplatz (3) fest verankert angeordnet wurde.

6. Schienenfahrzeug entsprechend Anspruch 5, **dadurch gekennzeichnet, dass** der Geländegegenstand auf der gegenüberliegenden Seite des Zwischenlagerplatzes (3) ein steifes ununterbrochenes Geländer bildet, das an Stützen (10) befestigt ist und sich an der Seite des Zwischenlagerplatzes (3) mehrere steife Geländerstücke befinden, die an Stützen (11) befestigt sind.

7. Schienenfahrzeug nach Anspruch 6, **dadurch gekennzeichnet, dass** das Geländer gleichzeitig eine Stromschiene (9) bildet.

8. Schienenfahrzeug nach einem der Ansprüche 5-7, **dadurch gekennzeichnet, dass** die Hilfsrahmen (13) sich unabhängig voneinander unter dem Wagenrahmen (12) bewegen können.

9. Schienenfahrzeug nach Anspruch 5, **dadurch gekennzeichnet, dass** mindestens eines der Stützräder (19) mit einem Feststellmittel gekoppelt ist, das das Verdrehen der Stützräder verhindert.

10. Schienenfahrzeug nach einem oder jedem der Ansprüche 5-9 **dadurch gekennzeichnet, dass** die Hebeeinrichtungen (18, 20) mit einem hydraulischen Antrieb gekoppelt sind.

11. Schienenfahrzeug nach einem der Ansprüche 5-10, **dadurch gekennzeichnet, dass** ein den Hilfsrahmen (13) mit dem Wagenrahmen (12) verbindendes Organ an dem Hilfsrahmen (13) oder dem Wagenrahmen (12) befestigt ist und aus einem fest installierten Führungsstift und einer im Hilfsrahmen (13), beziehungsweise dem Wagenrahmen (12) befindlichen Aufnahmeöffnung besteht, in die der Führungsstift konzentrisch eingeführt wird.

12. Schienenfahrzeug nach Anspruch 11, **dadurch gekennzeichnet, dass** der Führungsstift von einem Federelement umgeben ist, das als Dämpfungsglied wirkt.

13. Schienenfahrzeug nach einem der Ansprüche 5-12, **dadurch gekennzeichnet, dass** die Bewegungskonstruktion (22) als Bewegungsarm (24) ausgebildet ist und im von Fahrzeug (5) entfernten Endbereich auf ein neben dem Zwischenlagerplatz (3) fest installierten Geländegegenstand eingeklinkt werden kann.

14. Schienenfahrzeug nach Anspruch 13, **dadurch gekennzeichnet, dass** der Bewegungsarm (24) aus einem hydraulischen Arbeitszylinder besteht.

15. Schienenfahrzeug nach einem der Ansprüche 5-14, **dadurch gekennzeichnet, dass** die Bewegungskonstruktion (22) zur Energieversorgung vorteilhaft über einen Stromschienenschuh als Stromabnehmer verfügt.
